# FASCICULE DE BREVET EUROPEEN

(11) **EP 0 758 967 B1**
(45) Date de publication et mention de la délivrance du brevet: **16.12.1998**
(21) Numéro de dépôt: 95917379.0
(22) Date de dépôt: 12.04.1995
(51) Int. Cl.: B60T 13/66

(54) **SYSTEME DE REGULATION DE PRESSION A STRUCTURE HYBRIDE POUR UN CIRCUIT HYDRAULIQUE DE FREINAGE DE VEHICULE AUTOMOBILE**
HYBRID-DRUCKREGELSYSTEM FÜR EINE HYDRAULISCHE KRAFTFAHRZEUGBREMSANLAGE
HYBRID PRESSURE CONTROL SYSTEM FOR A MOTOR VEHICLE HYDRAULIC BRAKE CIRCUIT

(30) Priorité: 06.05.1994 FR 9405632
(43) Date de publication de la demande: 26.02.1997
(73) Titulaire: Bosch Systemes de Freinage, 93700 Drancy (FR)
(72) Inventeur: KERVAGORET, Gilbert, F-95100 Argenteuil (FR)
(74) Mandataire: Bentz, Jean-Paul
(86) Numéro de dépôt international: FR9500469
(87) Numéro de publication internationale: WO9530565

(56) Documents cités:
- EP-A- 0 391 353
- EP-A- 0 470 858
- EP-A- 0 470 859
- WO-A-93/09012

## Description

La présente invention concerne les systèmes de régulation de pression dans les circuits hydrauliques de freinage de véhicules automobiles. Dans ces circuits comme dans la plupart des installations hydrauliques, il est nécessaire de faire varier la pression hydraulique dans un récepteur de pression, en réponse à un signal de commande. Le récepteur de pression peut être constitué par exemple par un vérin hydraulique ou par un moteur hydraulique, et le signal de commande peut être par exemple mécanique, hydraulique ou électrique.

Le document GB-A-2 215 416, par exemple, divulgue un système de ce genre où le récepteur de pression est un moteur de frein et où le signal de commande est électrique. Le système décrit dans ce document présente cependant de nombreux inconvénients, comme par exemple une consommation électrique très importante. Il présente surtout l'inconvénient majeur que la moindre défaillance du circuit électrique prive le véhicule équipé de ce système de tout freinage. Une telle défaillance est d'autant plus susceptible de se produire que la consommation électrique est importante.

On connaît d'autre part de nombreux systèmes de freinage où le signal de commande est mécanique, généralement constitué d'un maître-cylindre commandé par une pédale de frein et éventuellement associé à un servomoteur d'assistance, qui peuvent comprendre des électrovalves, à commande électrique, assurant une fonction d'antiblocage des roues au freinage ou d'antipatinage des roues à l'accélération. Ces systèmes ne permettent toutefois pas une commande purement électrique de la pression de freinage. Une telle commande est toutefois désirable si l'on veut que le système remplisse également une fonction de freinage automatique, par exemple en relation avec un radar anti-collision.

La présente invention a par conséquent pour objet de proposer un système de régulation de pression dans un circuit hydraulique de freinage, pouvant basculer d'un mode de commande purement électrique ou automatique à un mode de commande mécanique ou manuel, et dans lequel une défaillance du circuit de commande automatique permette toujours un fonctionnement sous l'effet d'une commande mécanique ou manuelle.

La présente invention concerne donc un système de régulation de pression dans un circuit hydraulique comprenant au moins un générateur de fluide sous pression, au moins un réservoir de fluide sous basse pression et au moins un récepteur de pression, le système comprenant au moins une électrovalve comportant un bobinage électrique et un noyau magnétique mobile commandant la position d'un tiroir distributeur coulissant dans un alésage, l'alésage communiquant avec un premier conduit relié au générateur de fluide sous pression, un second conduit relié au récepteur de pression, et un troisième conduit relié au réservoir de fluide sous basse pression, lorsque le système fonctionne en réponse à un premier type de signal de commande, le bobinage de l'électrovalve commandant la position du tiroir distributeur étant de type proportionnel.

Un tel système est connu par exemple de EP-A-0 470 858.

Selon l'invention, le système de régulation de pression comporte une électrovalve à deux positions reliée au générateur de fluide sous pression et au réservoir de fluide sous basse pression pour interrompre l'alimentation du système par le générateur de fluide sous pression et permettre son alimentation par un second générateur de fluide sous pression fonctionnant en réponse à un deuxième type de signal de commande si au moins une condition permettant le fonctionnement en réponse au premier type de commande n'est pas remplie.

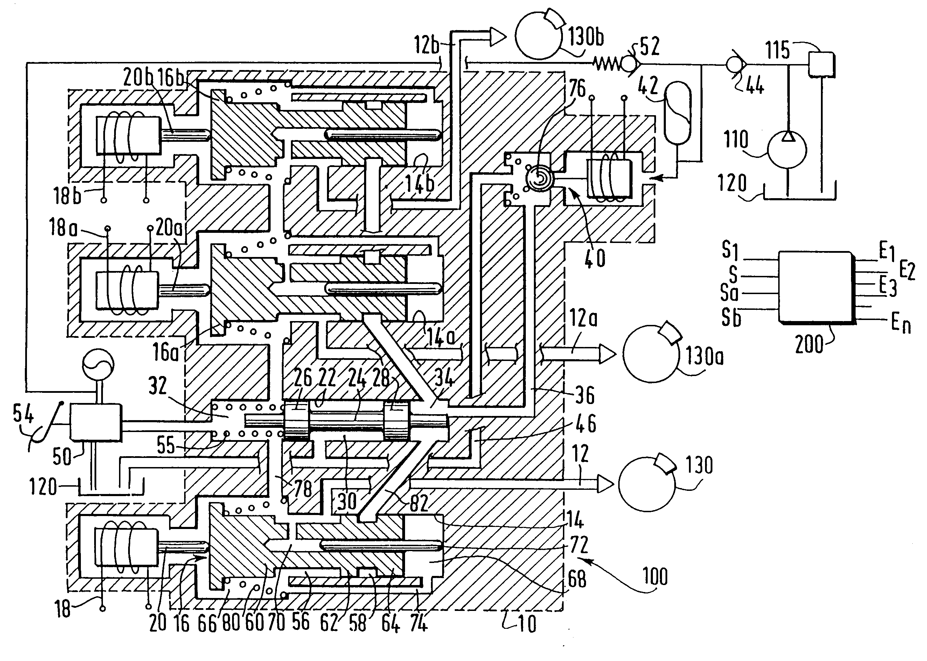

L'invention sera mieux comprise et d'autres buts, caractéristiques et avantages ressortiront de la description qui va être faite d'un mode de réalisation, en référence au dessin annexé sur lequel :
- La Figure unique représente schématiquement en coupe un mode de réalisation d'un système de régulation de pression conforme à la présente invention.

On a représenté sur la Figure un système de régulation de pression, comportant un module de régulation, désigné dans son ensemble par la référence 100, disposé dans un circuit hydraulique entre une source de fluide sous haute pression 110 munie d'un clapet de décharge ou de sécurité 115, un réservoir de fluide sous basse pression 120, et au moins un récepteur de pression 130, 130a, 130b.

Le module de régulation 100 est formé dans un corps 10, et chaque récepteur de pression 130, 130a, 130b est relié par un conduit 12, 12a, 12b à un alésage 14, 14a, 14b formé dans le corps 10. Dans chaque alésage 14, 14a, 14b est susceptible de coulisser un tiroir de distributeur 16, 16a, 16b sous la commande d'un bobinage d'électrovalve 18, 18a, 18b, du type proportionnel, coopérant avec un noyau magnétique mobile solidaire d'un poussoir 20, 20a, 20b.

On sait que le bobinage des électrovalves de ce type présente la caractéristique essentielle de pouvoir fournir un effort sensiblement constant pour un courant déterminé dans une plage de déplacement du noyau magnétique non négligeable. Cette caractéristique est mise à profit dans la présente invention pour assurer la fonction requise de régulation de pression par une modulation du courant circulant dans le bobinage 18, 18a, 18b.

Le corps 10 comporte également un alésage 22 dans lequel coulisse un tiroir distributeur 24 à deux portées 26 et 28, délimitant dans l'alésage 22 une chambre centrale 30 et deux chambres d'extrémité 32 et 34.

La chambre d'extrémité 34 est reliée par un conduit 36 à une des voies d'une électrovalve à trois voies et deux positions 40, qui est reliée d'autre part à la source de fluide sous haute pression 110 par l'intermédiaire d'un accumulateur de pression 42 et d'un clapet anti-retour 44, et au réservoir de fluide sous basse pression 120 par un conduit 46.

La chambre d'extrémité 32 est reliée à un distributeur-doseur 50, modulant la pression hydraulique fournie par la source de fluide sous haute pression 110 à travers un clapet taré 52, en fonction de l'effort exercé par le conducteur du véhicule sur une pédale de frein 54. Un ressort de compression 55 est de plus disposé dans la chambre 32 pour solliciter le tiroir 24 en position de repos.

La structure et le fonctionnement des tiroirs 16, 16a, 16b étant identiques, ils ne seront décrits par la suite qu'en référence au tiroir 16, et pourront être aisément déduits pour les autres tiroirs en ajoutant l'indice a ou b.

Le tiroir 16 est conçu pour ouvrir ou fermer une communication entre le récepteur de pression 130, la chambre 32 et la chambre 34 du distributeur 24. Pour remplir cette fonction, le tiroir 16 coulisse dans l'alésage 14 et comporte deux gorges 56 et 58 délimitées par trois portées 60, 62 et 64, les faces extrêmes du tiroir 16 étant situées dans des chambres 66 et 68 de part et d'autre du tiroir 16.

Le tiroir 16 comporte également un alésage axial borgne 70, en communication permanente avec la gorge 56, fermé de façon étanche par une aiguille 72 en appui sur le corps 10. L'alésage 70 forme une chambre de réaction créant une force de réaction s'opposant à la force agissant sur le poussoir 20, comme on le verra plus loin.

Les volumes 66 et 68 communiquent en permanence entre eux grâce à un conduit 74. Selon la position du tiroir 16, la portée 62 autorise ou interrompt la communication entre le conduit 12 et la chambre 34, de même que la portée 60 autorise ou interrompt la communication entre le conduit 12 et la chambre 66. Dans sa position de repos, le tiroir distributeur 24 autorise la communication entre les chambres 32 et 66.

Le fonctionnement du système de régulation de pression de freinage qui vient d'être décrit va maintenant être expliqué. Au repos, tous les éléments occupent la position représentée sur la Figure.

Le véhicule équipé de ce système de régulation de freinage est par ailleurs équipé d'un processeur 200 recevant comme signaux d'entrée les signaux E₁, E₂, E₃,....,Eₙ émis par différents capteurs (non représentés) installés sur le véhicule, et délivrant des signaux de sortie S₁ pour commander l'excitation de l'électrovalve 40, ainsi que des signaux S, Sₐ, S_{b} pour commander l'intensité du courant dans les bobinages 18, 18a, 18b respectivement. Les capteurs délivrant les signaux E₁,...,Eₙ mesurent par exemple, entre autres, la vitesse du véhicule et la vitesse de rotation des roues du véhicule. Les signaux d'entrée E₁,..., Eₙ du processeur 200 peuvent également provenir d'un radar anti-collision ou de toute autre source.

On supposera tout d'abord que tous les capteurs installés sur le véhicule équipé de ce système de régulation de pression de freinage, et dont les signaux E₁,...,Eₙ sont représentatifs d'un des paramètres de freinage, sont pleinement opérationnels. Toutes les conditions sont alors réunies pour qu'un freinage puisse intervenir sous l'effet d'un signal de commande électrique.

Le processeur 200 commande alors par sa sortie S₁ l'excitation de l'électrovalve 40. Cette dernière vient alors occuper l'une de ses positions où elle obture le conduit 46, par exemple au moyen d'une bille 76, et où elle autorise la communication entre la source 110, et l'accumulateur de pression 42, avec le conduit 36.

Le fluide sous haute pression issu de la source 110 est donc communiqué à la chambre 34 dans l'alésage 22, ce qui a pour effet de repousser le tiroir distributeur 24 à l'encontre de l'action du ressort 55, dans une position dans laquelle la portée 26 est déplacée et interrompt la communication entre la chambre 66 et la chambre 32, et où elle autorise la communication entre la chambre 66 et la chambre 30, elle-même en communication permanente avec le réservoir de fluide sous basse pression 120 par le conduit 46.

Le récepteur de pression 130 se trouve alors relié au réservoir de fluide sous basse pression 120 par l'intermédiaire du conduit 12, de la gorge 56 du tiroir 16, des chambres 66 et 30 communiquant entre elles par un conduit 78, et du conduit 46.

Le fluide sous haute pression issu de la source 110 parvient également, par l'intermédiaire du conduit 36 et de la chambre 34, à la gorge 58 du tiroir 16, qui est alors dans la position de repos représentée. En fonction des informations qu'il reçoit de la part des différents capteurs, le processeur 200 commande alors par sa sortie S l'intensité du courant dans le bobinage 18 pour solliciter le tiroir 16, par l'intermédiaire du poussoir 20, à l'encontre d'un ressort de rappel 80.

Les chambres 66 et 68 communiquant entre elles par le conduit 74 et étant reliées au réservoir de fluide sous basse pression 120, la force engendrée par le courant circulant dans le bobinage 18 ne doit s'opposer qu'à celle du ressort 80, la consommation électrique de l'électrovalve se trouvant ainsi réduite.

Le courant augmentant dans le bobinage 18 entraîne le déplacement du tiroir 16 à l'encontre de l'action de ce ressort 80. Ce déplacement entraîne le mouvement de la portée 60 dans l'alésage 14 pour interrompre la communication entre la gorge 56 et la chambre 66. Le récepteur de pression 130 se trouve alors isolé du réservoir 120.

L'intensité du courant circulant dans le bobinage 18, et la position du tiroir 16, sont alors comprises dans les plages de valeurs pour lesquelles il y a proportionnalité entre l'effort exercé sur le tiroir 16 et le courant de commande.

Le processeur 200 peut alors moduler le courant dans cette plage de valeurs. Si l'intensité du courant augmente, le tiroir 16 est un peu plus sollicité à l'encontre de l'action du ressort 80, de sorte que la gorge 56 du tiroir 16 soit à la fois en communication avec le conduit 12 d'alimentation du récepteur de pression 130 et avec la chambre 34 par un conduit 82. Le fluide sous haute pression issu de la source 110 est donc communiqué au récepteur de pression 130, dans lequel la pression augmente.

Si l'intensité du courant diminue, la force exercée par le poussoir 20 sur le tiroir 16 diminue et le tiroir 16 est sollicité dans l'autre sens par le ressort 80, de sorte que la gorge 56 du tiroir 16 soit à la fois en communication avec le conduit 12 d'alimentation du récepteur de pression 130 et avec la chambre 66, elle-même en communication avec le réservoir 120. La pression dans le récepteur de pression 130 peut donc diminuer.

On voit donc que, dans l'hypothèse où le fonctionnement de tous les capteurs dont la fonctionnalité est nécessaire au freinage a été validé par le processeur 200, le freinage du véhicule peut être assuré sous l'effet de la seule commande électrique du processeur 200, ce dernier modulant, par exemple par découpage, l'intensité du courant dans le bobinage 18 pour moduler en conséquence la pression dans le récepteur 130.

On voit également que, pendant cette phase de modulation, la pression régnant dans la chambre de réaction 70 est en permanence égale à la pression régnant dans le récepteur de pression 130, et crée sur le tiroir 16 une force s'opposant au déplacement du tiroir et fonction directe de la pression régnant dans le récepteur de pression, ce qui permet de piloter précisément cette pression par l'intensité du courant dans le bobinage 18.

Le freinage ainsi obtenu par commande électrique peut présenter toutes les caractéristiques désirées, et mémorisées dans le processeur 200, pour remplir par exemple les fonctions d'antiblocage des roues, d'antipatinage à l'accélération, de retenue en côte du véhicule, de maintien de vitesse constante ou de distance constante par rapport au véhicule précédent, ces exemples n'étant pas limitatifs.

Le freinage peut également être obtenu par commande mécanique ou manuelle. L'électrovalve 40 est alors au repos, et interdit la communication entre la source de fluide sous haute pression 110 et le conduit 36. La chambre 34 dans l'alésage 22 est alors reliée au réservoir sous basse pression 120 par les conduits 36 et 46, et le tiroir distributeur 24 occupe la position représentée.

Lorsque le conducteur du véhicule appuie sur la pédale 54, le distributeur-doseur 50, alimenté en fluide sous pression par la source 110 à travers les clapets 44 et 52, module la pression dans la chambre 32 en fonction de l'effort exercé par le conducteur sur la pédale 54.

La pression dans la chambre 32 est communiquée à la chambre 66 par le conduit 78, à la gorge 56 du tiroir 16, au conduit 12 et ainsi au récepteur de pression 130. Le conducteur du véhicule peut ainsi moduler directement la pression dans le récepteur 130, et par conséquent le freinage du véhicule, de façon tout à fait conventionnelle.

Si, au cours d'un tel freinage, le processeur 200 détecte l'imminence du blocage d'une roue, par exemple celle qui est associée au récepteur de pression 130, il commande alors l'augmentation du courant dans le bobinage 18.

Cette augmentation du courant se traduit par un déplacement du tiroir 16 à l'encontre du ressort 80, jusqu'à ce que la portée 60 vienne interrompre la communication entre la chambre 66 et la gorge 56. A ce moment, la fourniture de fluide sous pression au récepteur 130 par le distributeur-doseur 50 est interrompue.

Le courant continuant de croître dans le bobinage 18 entraîne un déplacement supplémentaire du tiroir 16, amenant la portée 62 au delà de l'ouverture du conduit 82 dans l'alésage 14, mettant ainsi en communication la gorge 56, et donc le récepteur 130, avec le réservoir sous basse pression 120 par l'intermédiaire du conduit 82, de la chambre 34 et des conduits 36 et 46.

La pression dans le récepteur 130 peut donc décroître, jusqu'à ce que le processeur 200 détecte une vitesse de rotation de la roue associée au récepteur 130 trop élevée. Il commande alors une diminution du courant dans le bobinage 18, d'où il résulte un mouvement du tiroir 16 en sens inverse sous l'action du ressort 80.

Le déplacement des portées 62 et 60 a pour effet d'interrompre la communication précédemment établie entre le récepteur 130 et le réservoir sous basse pression 120, et de rétablir la communication entre le récepteur 130 et le distributeur-doseur 50 par l'intermédiaire de la chambre 32, du conduit 78, de la gorge 56 et du conduit 12. La pression dans le récepteur 130 peut ainsi augmenter de nouveau.

Comme dans le cas d'un freinage à commande électrique, la pression régnant dans la chambre de réaction 70 est en permanence égale à la pression régnant dans le récepteur 130, de sorte que le processeur 200 peut piloter de façon très précise la pression dans le récepteur 130 pour un fonctionnement à commande manuelle, avec une phase d'antiblocage.

On voit donc bien qu'on a réalisé un système de régulation de pression de freinage, autorisant un mode de fonctionnement automatique, à commande purement électrique, permettant par exemple d'assurer l'antipatinage des roues à l'accélération, et un mode de fonctionnement à commande manuelle, permettant d'assurer un freinage conventionnel du véhicule, éventuellement accompagné d'un fonctionnement en antiblocage des roues.

De plus, lors du fonctionnement automatique, l'électrovalve 40 étant excitée, le tiroir distributeur 24 est déplacé par la pression régnant dans la chambre 34 issue de la source de fluide sous haute pression 110. Le clapet 52, intercalé entre la source 110 et le distributeur-doseur 50, est taré par exemple à 30 bars, de sorte que la pression maximale susceptible d'être délivrée par le distributeur-doseur 50 dans la chambre 32 soit inférieure à la pression régnant dans la chambre 34, égale à la pression fournie par la source 110.

Ainsi, lors du fonctionnement en freinage automatique, une action du conducteur sur la pédale 54 résultera dans tous les cas en une pression dans la chambre 32 inférieure à la pression dans la chambre 34, et donc incapable d'agir sur le tiroir distributeur 24. Le clapet taré 52 donne donc la priorité au freinage automatique en empêchant toute intervention du conducteur qui pourrait venir perturber le fonctionnement à commande électrique.

D'autre part, si le processeur 200 détecte une défaillance d'au moins un des capteurs équipant le véhicule, il interdit alors toute excitation de l'électrovalve 40, ou si le processeur 200 est lui-même en défaillance, l'électrovalve 40 reprend d'elle-même sa position de repos représentée. Le tiroir distributeur 24 occupe la position représentée sur la Figure, où le freinage à commande mécanique ou manuelle est possible, avec éventuellement un fonctionnement en antiblocage si le processeur 200 est opérationnel et si tous les capteurs spécifiques à un tel fonctionnement sont également opérationnels.

Bien entendu, l'invention n'est pas limitée au mode de réalisation qui vient d'être décrit, et l'homme de l'art pourra lui apporter de nombreuses modifications sans sortir du cadre de l'invention telle que définie par les revendications annexées. C'est ainsi que trois récepteurs de pression ont été représentés, dont deux pourront être utilisés par exemple pour freiner chacune des roues avant d'un véhicule indépendamment l'une de l'autre et le troisième pour freiner simultanément les roues arrière du véhicule. Il est bien évident que l'on pourra n'utiliser que deux électrovalves proportionnelles si une répartition de freinage avant-arrière est jugée suffisante, ou en utiliser quatre ou plus si on désire freiner séparément les quatre roues du véhicule ou si ce dernier comporte plus de deux essieux. De même, on pourra utiliser un maître-cylindre conventionnel, associé à un servomoteur pneumatique d'assistance, à la place du distributeur-doseur, en s'assurant que la pression maximale qu'il peut fournir soit inférieure à la pression délivrée par la source de fluide sous haute pression.

## Revendications

1. Système de régulation de pression dans un circuit hydraulique comprenant au moins un générateur de fluide sous pression (110), au moins un réservoir de fluide sous basse pression (120) et au moins un récepteur de pression (130, 130a, 130b), le système comprenant au moins une électrovalve comportant un bobinage électrique (18, 18a, 18b) et un noyau magnétique mobile commandant la position d'un tiroir distributeur (16, 16a, 16b) coulissant dans un alésage (14, 14a, 14b), l'alésage (14, 14a, 14b) communiquant avec un premier conduit (82) relié au générateur de fluide sous pression (110), un second conduit (12) relié au récepteur de pression (130, 130a, 130b), et un troisième conduit (78) relié au réservoir de fluide sous basse pression (120), lorsque le système fonctionne en réponse à un premier type de signal de commande (S₁, S, Sₐ, S_{b}), le bobinage de l'électrovalve commandant la position du tiroir distributeur (16,16a,16b) étant de type proportionnel, caractérisé en ce que le système de régulation comporte une électrovalve (40) à deux positions reliée au générateur de fluide sous pression (110) et au réservoir de fluide sous basse pression (120) pour interrompre l'alimentation du système par le générateur de fluide sous pression (110) et permettre son alimentation par un second générateur de fluide sous pression (50) fonctionnant en réponse à un deuxième type de signal de commande (54) si au moins une condition permettant le fonctionnement en réponse au premier type de commande (S₁, S, Sₐ, S_{b}) n'est pas remplie.

2. Système de régulation de pression selon la revendication 1, caractérisé en ce que le premier type de signal de commande (S₁, S, Sₐ, S_{b}) est électrique, et en ce que le deuxième type de signal de commande (54) est mécanique ou manuel.

3. Système de régulation de pression selon la revendication 1, caractérisé en ce qu'il comporte un tiroir distributeur (24) délimitant dans un alésage (22) une première chambre d'extrémité (34) reliée à l'électrovalve (40) à deux positions et une deuxième chambre d'extrémité (32) reliée au second générateur de fluide sous pression (50).

4. Système de régulation de pression selon la revendication 3, caractérisé en ce, dans une première position, l'électrovalve (40) à deux positions relie la première chambre d'extrémité (34) au générateur de fluide sous pression (110) pour un fonctionnement en réponse au premier type de signal de commande (S₁, S, Sₐ, S_{b}), et dans une seconde position, l'électrovalve (40) à deux positions relie la première chambre d'extrémité (34) au réservoir de fluide sous basse pression (120) pour un fonctionnement en réponse au deuxième type de signal de commande (54).

5. Système de régulation de pression selon la revendication 3, caractérisé en ce que les première (34) et deuxième (32) chambres d'extrémité sont reliées aux premier et troisième conduits (78, 82).

6. Système de régulation de pression selon l'une des revendications précédentes, caractérisé en ce que le second générateur de fluide sous pression (50) est un distributeur-doseur relié à la deuxième chambre d'extrémité (32), et modulant la pression en fonction de l'effort exercé sur une pédale de frein (54).

7. Système de régulation de pression selon la revendication 6, caractérisé en ce que le distributeur-doseur (50) est relié au générateur de fluide sous pression (110) par l'intermédiaire d'un clapet taré (52).

## Claims

1. System for regulating pressure in a hydraulic circuit comprising at least one generator (110) of fluid under pressure, at least one reservoir (120) of fluid under low pressure and at least one pressure receiver (130, 130a, 130b), the system comprising at least one solenoid valve including an electrical winding (18, 18a, 18b) and a moving magnetic core controlling the position of a distributor slide valve (16, 16a, 16b) sliding in a bore (14, 14a, 14b), the bore (14, 14a, 14b) communicating with a first duct (82) connected to the generator (110) of fluid under pressure, a second duct (12) connected to the pressure receiver (130, 130a, 130b) and a third duct (78) connected to the reservoir (120) of fluid under low pressure when the system operates in response to a first type of control signal (S₁, S, Sₐ, S_{b}), the winding of the solenoid valve controlling the position of the distributor slide valve (16, 16a, 16b) being of proportional type characterized in that the system for regulating pressure includes a two-position solenoid valve (40) connected to the generator (110) of fluid under pressure and to the reservoir (120) of fluid under low pressure for interrupting the feeding of the system by the generator (110) of fluid under pressure and allowing it to be fed by a second generator (50) of fluid under pressure operating in response to a second type of control signal (54) if at least one condition allowing operation in response to the first type of control (S₁, S, Sₐ, S_{b}) is not fulfilled.

2. System for regulating pressure according to Claim 1, characterized in that the first type of control signal (S₁, S, Sₐ, S_{b}) is electrical, and in that the second type of control signal (54) is mechanical or manual.

3. System for regulating pressure according to Claim 1, characterized in that it includes a distributor slide valve (24) delimiting within a bore (22) a first end chamber (34) connected to the two-position solenoid valve (40) and a second end chamber (32) connected to the second generator (50) of fluid under pressure.

4. System for regulating pressure according to Claim 3, characterized in that, in a first position, the two-position solenoid valve (40) connects the first end chamber (34) to the generator (110) of fluid under pressure for operation in response to a first type of control signal (S₁, S, Sₐ, S_{b}), and in a second position the two-position solenoid valve (40) connects the first end chamber (34) to the reservoir (120) of fluid under low pressure for operation in response to the second type of control signal (54).

5. System for regulating pressure according to Claim 3, characterized in that the first (34) and second (32) end chambers are connected to the first and third ducts (78, 82).

6. System for regulating pressure according to one of the preceding claims, characterized in that the second generator (50) of fluid under pressure is a metering distributor connected to the second end chamber (32) and modulating the pressure as a function of the effort exerted on a brake pedal (54).

7. System for regulating pressure according to Claim 6, characterized in that the metering distributor (50) is connected to the generator (110) of fluid under pressure by means of a calibrated valve (52).

## Patentansprüche

1. System zum Regulieren des Drucks in einem Hydraulikkreis mit mindestens einem Druckfluidgenerator (110), mindestens einem Niederdruck-Fluidvorratsbehälter (120) und mindestens einem Druckempfänger (130, 130a, 130b), wobei das System mindestens ein Elektroventil mit einer elektrischen Spule (18, 18a, 18b) und einem beweglichen Magnetkern hat, der die Stellung eines Verteilschiebers (16, 16a, 16b) steuert, der in einer Bohrung (14, 14a, 14b) gleitet, wobei die Bohrung (14, 14a, 14b) mit einem ersten Kanal (82) verbunden ist, der an den Druckfluidgenerator (110) angeschlossen ist, sowie einem zweiten Kanal (12), der an den Druckempfänger (130, 130a, 130 b) angeschlossen ist, und mit einem dritten Kanal (78), der an den Niederdruck-Fluidvorratsbehälter (120) angeschlossen ist, wenn das System abhängig von einem ersten Typ von Steuersignal (S₁, S ,Sₐ, S_{b}) arbeitet, wobei die Spule des Elektroventils die Stellung des Verteilschiebers (16, 16a, 16b) steuert, der vom Typ Proportional ist, dadurch gekennzeichnet, daß das System zum Regulieren des Drucks ein Elektroventil (40) mit Zwei Stellungen enthält, das an den Druckfluidgenerator (110) und den Niederdruck-Fluidvorratsbehälter (120) angeschlossen ist, um die Versorgung des Systems durch den Druckfluidgenerator (110) zu unterbrechen und dessen Versorgung durch einen zweiten Druckfluidgenerator (50) zu erlauben, der abhängig von einem zweiten Typ von Steuersignal (54) arbeitet, wenn wenigstens eine Bedingung nicht erfüllt ist, die einen Betrieb abhängig von einem ersten Typ von Steuersignal (S₁, S, Sₐ, S_{b}) erlaubt.

2. System zum Regulieren des Drucks nach Anspruch 1, dadurch gekennzeichnet, daß der erste Typ von Steuersignal (S₁, S, Sₐ, S_{b}) elektrisch ist und der zweite Typ von Steuersignal (54) mechanisch oder manuell ist.

3. System zum Regulieren des Drucks nach Anspruch 1, dadurch gekennzeichnet, daß es einen Verteilschieber (24) enthält, der in einer Bohrung (22) eine erste Endkammer (34) abgrenzt, die an das Elektroventil (40) mit zwei Stellungen angeschlossen ist, und eine zweite Endkammer (32), die an den zweiten Druckfluidgenerator angeschlossen ist (50).

4. System zum Regulieren des Drucks nach Anspruch 3, dadurch gekennzeichnet, daß das Elektroventil (40) mit zwei Stellungen in einer ersten Stellung die erste Endkammer (34) für einen Betrieb abhängig vom ersten Typ von Steuersignal (S₁, S, Sₐ, S_{b}) mit dem Druckfluidgenerator (110) verbindet und in einer zweiten Stellung die erste Endkammer (34) mit dem Niederdruck-Fluidvorratsbehälter (129) für einen Betrieb abhängig vom zweiten Typ von Steuersignal (54) verbindet.

5. System zum Regulieren des Drucks nach Anspruch 3, dadurch gekennzeichnet, daß die erste (34) und die zweite (32) Endkammer mit dem ersten und dem dritten Kanal (78, 82) verbunden sind.

6. System zum Regulieren des Drucks nach einem der vorhergehenden Ansprüche, dadurch gekennzeichnet, daß der zweite Druckfluidgenerator (50) ein an die zweite Endkammer (32) angeschlossener Dosierverteiler ist, der den Druck abhängig von der Kraft reguliert, die auf ein Bremspedal (54) ausgeübt wird.

7. System zum Regulieren des Drucks nach Anspruch 6, dadurch gekennzeichnet, daß der Dosierverteiler (50) mittels eines austarierten Ventilelements (52) an den Druckfluidgenerator (110) angeschlossen ist.
